# EUROPÄISCHE PATENTANMELDUNG

(11) **EP 4 657 045 A1**
(43) Veröffentlichungstag der Anmeldung: **03.12.2025**
(21) Anmeldenummer: 24178870.2
(22) Anmeldetag: 29.05.2024
(51) Int. Cl.: G01N 21/84, G01B 11/06, G01N 21/86, G01N 21/3554, G01N 21/3563, G01N 21/47

(54) **BESTIMMUNG CHARAKTERISIERENDER PARAMETER EINER BESCHICHTUNG EINER BATTERIEELEKTRODE**

(71) Anmelder: Siemens Aktiengesellschaft, 80333 München (DE)
(72) Erfinder: Albrecht, Andreas, 91054 Erlangen (DE); Mack, Christian, 91056 Erlangen-Dechsendorf (DE); Pohle, Roland, 85570 Herdweg (DE); Schulte, Sascha, 91315 Höchstadt (DE); Witt, Jonas, 90419 Nürnberg (DE)
(74) Vertreter: Siemens Patent Attorneys

(57) **Zusammenfassung**

Die Erfindung betrifft die Bestimmung charakterisierender Parameter einer Beschichtung einer Batterieelektrode, insbesondere eine Restfeuchte und/oder Schichtdicke der Beschichtung, während der Herstellung der Batterieelektrode. Dazu wird elektromagnetische Strahlung IRR zur Trocknung der Beschichtung derart auf die Beschichtung appliziert, dass ein reflektiertes Strahlenfeld hervorgerufen wird, welches durch ein Speckle-Interferenzmuster charakterisiert ist. Das reflektierte Strahlenfeld und damit das charakteristische Speckle-Muster wird mit einer Kamera aufgenommen. Die damit erzeugten Bilder erlauben, aus dem jeweils abgebildeten Speckle-Muster die Parameter der Beschichtung abzuleiten.

## Beschreibung

Die Erfindung betrifft die Bestimmung charakterisierender Parameter einer Beschichtung einer Batterieelektrode.

Batterien, bspw. Lithium-lonen-Akkumulatoren bzw. -Batterien, werden aufgrund ihrer hohen Leistungsdichte und Energiedichte in mobilen wie auch in stationären Anwendungen als Energiespeicher eingesetzt.

Eine solche Batterie umfasst typischerweise mehrere Batteriezellen. Eine Batteriezelle umfasst ihrerseits eine Vielzahl von Schichten. Typischerweise umfassen diese Schichten Anoden, Kathoden, Separatoren und weitere Elemente. Diese Schichten können als Stapel oder als Wicklungen ausgestaltet sein.

Bei der Produktion von Batteriezellen und vergleichbar aufgebauten Flächenelementen werden die Elektroden zunächst auf langen folienartigen Bahnen beschichtet und erst später zu den genannten Zellen verarbeitet. Diese Folien der Elektroden sind üblicherweise als Metallfolien ausgebildet, bspw. umfassend Kupfer und/oder Aluminium, welche mit einem Aktivmaterial beschichtet werden. Als Aktivmaterial wird dabei typischerweise eine Paste verwendet, welche bspw. Mischungen aus Graphit, Bindemitteln, Lösemitteln und ggf. weiteren Bestandteilen enthält und in nasser Form auf die Folie aufgetragen wird. In einem sich an diesen Beschichtungsschritt anschließenden Verfahrensschritt wird die aufgetragene Beschichtung getrocknet.

Für die Qualität der Batteriezellen bzw. der Elektroden maßgebliche Faktoren sind insbesondere die in der Beschichtung verbleibende Restfeuchte sowie die Dicke und die Oberflächenrauheit der Beschichtung.

Aufgrund des erheblichen Einflusses der in der Beschichtung verbleibenden Restfeuchte auf die Qualität der Elektrode stellt der Trocknungsschritt einen sensiblen Teil des Herstellprozesses dar. Aufgrund verschiedener Effekte, bspw. bei unzureichend homogenisierter Paste, können Bereiche auftreten, die beim Beschichten unterschiedliche Feuchtegrade aufweisen. Auch nach der weiteren Verarbeitung, d.h. insbesondere nach der Trocknung, können diese Bereiche dann weiterhin unterschiedlich feucht und dabei insbesondere zu feucht sein. Typischerweise ist ein Restfeuchte-Sollwert in der Größenordnung von -je nach Zellchemie und Prozess- einigen wenigen 100 ppm nicht zu überschreiten. Das Ansprechen der Beschichtung auf die eingebrachten Trocknungsmaßnahmen wird jedoch durch diverse Effekte beeinflusst, so dass kaum zu garantieren ist, dass ein gewünschter, homogener Trocknungsgrad erreicht wird.

Neben der Restfeuchte beeinflussen auch die Dicke sowie die Rauheit der Oberfläche der Beschichtung die Qualität der Elektrode. Folie und Beschichtung weisen jeweils eine Dicke von einigen Mikrometern auf. Aufgrund dessen haben Unregelmäßigkeiten der Dicke, die sich bspw. ebenfalls in der Größenordnung eines Mikrometers bewegen können, negative Auswirkungen auf die Qualität der Elektrode.

Die Gleichmäßigkeit der Beschichtung bspw. hinsichtlich Schichtdicke, Rauheit und Homogenität ist in den aktuellen Herstellprozessen aufgrund der zahlreichen Einflussgrößen und der bisher nur zum Teil möglichen Inline-Überwachung, d.h. Überwachung während des Herstellprozesses, nur schwer einzuhalten, was zu vergleichsweise hohem Ausschuss führt. Zur Inline-Überwachung dieser Parameter stehen heute nur bedingt geeignete Sensorsysteme zur Verfügung. Diese sind bspw. aus mehreren verschiedenen Sensortypen zusammengesetzt, wobei jeder Sensor eine individuelle Messaufgabe erfüllt. Dies resultiert in der Notwendigkeit, eine Vielzahl von Sensoren zu erwerben und zu integrieren, was letztendlich die Kosten sowie die Komplexität des Systems erhöht.

Um sicherzustellen, dass die Restfeuchte in der Beschichtung unter einem vorgegebenen Höchstwert liegt, wird in vielen Fällen eine pauschale starke Übertrocknung angewendet. Dies ist jedoch mit erheblichem Energieaufwand verbunden. Zur Messung der Restfeuchte sind verschiedene Ansätze bekannt, die jedoch sämtlich erst nach vollendeter Produktion angewendet werden können und teilweise destruktiv sind: Bekannt ist bspw., Stichproben extraktiv aus der produzierten Elektrodenbahn zu stanzen oder ganze Abschnitte aus der Produktion zu entnehmen. Das so entnommene Material kann bspw. mittels einer Karl-Fischer-Titration auf seinen Feuchtegehalt untersucht werden. Eine weitere Methode umfasst das Wiegen unter Heizen der Probe. Der Gewichtsverlust nach dem Heizvorgang entspricht dabei der Wassermenge, die aus der Probe abdampft.

Die Überwachung dieser und weiterer Parameter der Beschichtungsqualität wie bspw. der Schichtdicke erfordert derzeit erheblichen zusätzlichen Aufwand, bspw. in Form von aufwändigen, spezifischen Messgeräten oder Offline-Analysen der Beschichtungsqualität. Je nach Produktionsprozess können fehlerhafte Beschichtungen häufig erst nach Abschluss des gesamten Produktionsprozesses der Batteriezelle im Rahmen eines sogenannten End-of-line-Tests durchgeführt werden.

Nachteilig werden also bei qualitativ minderwertiger Beschichtung aufgrund von zu hoher Restfeuchte, unregelmäßiger Schichtdicke und ggf. anderen Unregelmäßigkeiten qualitativ minderwertige Batteriezellen hergestellt, bspw. hinsichtlich ihrer elektrischen Leistungsparameter wie bspw. der Kapazität, der Lebensdauer und der Betriebssicherheit. Qualitativ minderwertige Beschichtungen führen auch zu einer hohen Ausschussquote, so dass bereits mit einem hohen Kosten- und Energieaufwand gefertigte Batteriezellen verworfen werden müssen. Derzeit liegt die Ausschussquote für bereits gefertigte Batteriezellen im einstelligen Prozentbereich. Weiterhin kann sich minderwertige Qualität in verminderten mechanischen Eigenschaften wie der Haftkraft zeigen, was sich ebenfalls in geringerer Lebensdauer niederschlagen kann.

Es ist daher eine Aufgabe der vorliegenden Erfindung, einen Ansatz zur Produktion von qualitativ hochwertigen Batterieelektroden einzuführen, der die genannten Nachteile des Standes der Technik überwindet. Dies wird durch das in Anspruch 1 beschriebene Verfahren und die in Anspruch 11 erläuterte Vorrichtung gelöst. Die jeweiligen Unteransprüche beschreiben vorteilhafte Ausgestaltungen.

Zur Bestimmung einer Gruppe von Parametern PARAMn, insbesondere Restfeuchte LIQ, Schichtdicke DS und/oder Rauheit, einer Beschichtung einer Batterieelektrode während der Herstellung der Batterieelektrode, wird in einem ersten Schritt S1 mit Hilfe einer EM-Quelle elektromagnetische Strahlung IRR zur Erwärmung einer vorgegebenen Region einer Beschichtung derart zumindest auf einen vorgegebene Abschnitt einer Oberfläche der Beschichtung der Elektrode appliziert, dass ein charakteristisches, aus dem Abschnitt reflektiertes Strahlenfeld IRR_REFL hervorgerufen wird. Konsequenterweise hängt das reflektierte Strahlenfeld IRR_REFL unmittelbar mit der einfallenden elektromagnetischen Strahlung IRR und mit den Eigenschaften der Beschichtung in der Region zusammen, bspw. Restfeuchte LIQ, Schichtdicke DS und Oberflächenbeschaffenheit. In einem zweiten Schritt S2 wird zumindest ein Teil des reflektierten Strahlenfeldes IRR_REFL mit Hilfe eines geeignet konfigurierten Detektors detektiert, wobei der Detektor bspw. als Kamera ausgebildet ist und ein das reflektierte Strahlenfeld IRR_REFL repräsentierendes Bild IMA erzeugt. In einem dritten Schritt S3 werden aus dem detektierten Strahlenfeld bzw. aus dem Bild IMA die Parameter PARAMn der Beschichtung abgeleitet.

Die EM-Quelle ist eine Wärmequelle einer Trocknungseinrichtung einer Produktionsanlage zur Herstellung der Batterieelektrode, wobei der erste Schritt S1 Teil eines Trocknungsschrittes S_DRY eines Herstellprozesses PROD der Batterieelektrode zur Trocknung der Beschichtung mittels der elektromagnetischen Strahlung IRR ist, dass also das Applizieren der EM-Strahlung primär zum Trocknen der Beschichtung dient. Demnach wird also das Verfahren während eines Trocknungsschrittes der Beschichtung im Rahmen eines Herstellprozesses einer Batterieelektrode ausgeführt.

Die EM-Quelle ist derart eingerichtet und an die Eigenschaften der Beschichtung, insbesondere der Oberfläche der Beschichtung, angepasst, dass das reflektierte Strahlenfeld IRR_REFL ein als Speckle-Muster SPECK ausgebildetes Interferenzmuster aufweist, wobei ein jeweiliges Speckle-Muster SPECK durch zumindest einen Parameter PARA_SPECK(i) mit i=1,...,I charakterisiert ist, bspw. Körnung d und/oder Speckle-Kontrast SC.

Die EM-Quelle ist also derart eingerichtet, dass die von ihr abgegebene elektromagnetische Strahlung IRR bei der Reflektion an der Oberfläche der Beschichtung ein als Speckle-Muster SPECK ausgebildetes Interferenzmuster bewirkt, dass also das reflektierte Strahlenfeld IRR_REFL durch ein Speckle-Muster gekennzeichnet ist bzw. ein Speckle-Muster aufweist bzw. ein Speckle-Muster ist. Durch Auswertung der Parameter der Speckle-Muster können wesentliche Parameter der Beschichtung wie z.B. die Rauheit, oder das Auftreten von Inhomogenitäten ermittelt werden, ohne zusätzliche, kostenintensive Sensoren in die Anlage zu integrieren

Im zweiten Schritt S2 werden beim Detektieren in einem Teilschritt S_ANA_REC mit der Kamera dem detektierten Strahlenfeld IRR_REFL entsprechende Repräsentationen IMA, insbesondere -aber nicht zwingend- Bilder IMA des reflektierten Strahlenfelds IRR_REFL erzeugt, welche das Speckle-Muster SPECK repräsentieren. Im dritten Schritt S3 werden in einem Teilschritt S_ANA_CAL anhand zumindest einer der Repräsentationen IMA die Parameter PARAMn bestimmt.

Zur Bestimmung eines jeweiligen Parameters PARAMn im Teilschritt S_ANA_CAL werden vorab ermittelte Zusammenhänge zwischen dem jeweiligen Parameter PARAMn und einem oder mehreren Parametern PARA_SPECK(i) des Speckle-Musters SPECK verwendet, wobei diese Zusammenhänge entweder in Kalibrationsmessungen ermittelt oder mit Hilfe eines entsprechend trainierten künstlichen neuronalen Netzwerkes abgebildet werden. Dies ist insofern vorteilhaft, als dass Zusammenhänge zwischen den Parametern PARAMn und PARA_SPECK(i) auf verschiedenen überlagerten Effekten beruhen können, deren Gesamtwirkung aufgrund der vorgelagerten Kalibrationsmesssungen und/oder durch das entsprechend trainierte künstliche neuronale Netzwerk vorhergesagt werden kann.

Die Gruppe von Parametern PARAMn umfasst eine Restfeuchte LIQ der Beschichtung, eine Rauheit RH einer Oberfläche der Beschichtung und/oder eine Schichtdicke DS der Beschichtung in dem Abschnitt, wobei im Teilschritt S_ANA_CAL die Restfeuchte LIQ bestimmt wird, indem derjenige oder diejenigen relevanten Parameter PARA_SPECK(i') des Speckle-Musters SPECK ausgewertet werden, welche von der Restfeuchte LIQ abhängen, insbesondere eine Körnung d bzw. eine Größe von Strukturen und/oder ein Kontrast SC des Speckle-Musters SPECK und/oder deren zeitliche Änderung, die Schichtdicke DS bestimmt wird, indem derjenige oder diejenigen relevanten Parameter PARA_SPECK(i") des Speckle-Musters SPECK ausgewertet werden, welche von der Schichtdicke DS abhängen, insbesondere die zeitliche Änderung der Körnung d bzw. die Größe von Strukturen des Speckle-Musters SPECK(t), und/oder die Rauheit RH der Oberfläche bestimmt wird, indem derjenige oder diejenigen relevanten Parameter PARA_SPECK(i‴) des Speckle-Musters SPECK ausgewertet werden, welche von der Rauheit RH abhängen, insbesondere ein Speckle-Kontrast SC. Der Speckle-Kontrast SC ermittelt sich aus der mittleren Intensität I(ROI) in einem Gebiet ROI (region of interest) im Bild IMA und der entsprechenden Standardabweichung σ(ROI) mittels SC=σ(ROI)/I(ROI), wobei das Gebiet ROI zumindest einen Teil der Pixel eines jeweiligen Bildes IMA umfasst, die zum dort abgebildeten Speckle-Muster SPECK gehören.

Im Falle der Auswertung der zeitlichen Änderung eines jeweiligen Parameters wird natürlich auf eine Zeitserie von Bildern IMA zurückgegriffen.

Die Gruppe von Parametern PARAMn wird während der Ausführung eines Prozesses PROD zur Herstellung der Batterieelektrode in einer mehrere Komponenten umfassenden und zur Produktion nutzenden Produktionsanlage bestimmt, also in einem Inline-Ansatz. Damit kann also noch während der Produktion auf eventuelle Fehler oder Unzulänglichkeiten reagiert werden.

Nach der Bestimmung der Gruppe von Parametern PARAMn wird ein Kontrollsignal CONTR in Abhängigkeit von den bestimmten Parametern PARAMn erzeugt. Betriebsparameter BPA(k) einer oder mehrerer Komponenten k der Produktionsanlage werden in Abhängigkeit von dem Kontrollsignal CONTR und damit in Abhängigkeit von den bestimmten Parametern PARAMn angepasst.

Zusätzlich kann ein Verfahrensschritt zur Steuerung bzw. Regelung der Produktionsanlage in Abhängigkeit von den bestimmten Parametern PARAMn vorgesehen sein, bei dem der Betrieb zumindest einer der Komponenten k zur Ausführung des Herstellprozesses PROD von Werten VAL(BPA(k)) von jeweiligen Betriebsparametern BPA(k) der jeweiligen Komponente k abhängt. Die Betriebsparameter BPA(k) sind in Abhängigkeit von der Gruppe von Parametern PARAMn anpassbar. In einem Analyseteilschritt S_ANA_DEC des dritten Schritts S3 werden die im Teilschritt S_ANA_CAL bestimmten Parameter PARAMn mit entsprechenden Vorgaben DEFn verglichen. Für den Fall, dass zumindest einer der bestimmten Parameter PARAMn signifikant von der entsprechenden Vorgabe DEFn abweicht, wird ein Wert VAL(BPA(k)) zumindest eines bestimmten Betriebsparameters BPA(k) der zumindest einen Komponente k angepasst, um die Abweichung zu kompensieren.

Dabei ist eine Abweichung dann "signifikant", wenn ihr Betrag größer ist als ein vorgegebener Schwellwert THRESn.

Im Teilschritt S_ANA_DEC hängt die Entscheidung, welcher Betriebsparameter BPA(k) welcher Komponente k auf welchen neuen Wert VAL(BPA(k)) angepasst wird, davon ab, für welchen Parameter PARAMn die signifikante Abweichung festgestellt wurde und um welchen Wert dieser Parameter PARAMn von der entsprechenden Vorgabe DEFn abweicht.

Eine Vorrichtung zur Bestimmung dieser Gruppe von Parametern PARAMn der Beschichtung der Batterieelektrode während der Herstellung der Batterieelektrode weist eine EM-Quelle zur Erzeugung elektromagnetischer Strahlung IRR, einen Detektor und eine Auswerteeinheit auf. Die EM-Quelle ist derart konfiguriert, d.h. angeordnet und eingerichtet, dass die erzeugte elektromagnetische Strahlung IRR in eine vorgegebene Bestrahlungsregion REG_IRR ausgesendet wird und auf einen Abschnitt auf einer Oberfläche der Beschichtung fällt, so dass dort ein charakteristisches, aus dem Abschnitt reflektiertes Strahlenfeld IRR_REFL hervorgerufen wird. Der Detektor ist derart konfiguriert, d.h. angeordnet und eingerichtet, dass er das reflektierte Strahlenfeld IRR_REFL detektiert und demensprechende Repräsentationen IMA generiert. Die Auswerteeinheit ist zur Übermittlung der Repräsentationen IMA mit dem Detektor verbunden und eingerichtet, das oben beschriebene Verfahren auszuführen, um aus den Repräsentationen IMA die Parameter PARAMn zu bestimmen.

Die EM-Quelle ist eine Wärmequelle einer Trocknungseinrichtung einer Produktionsanlage zur Herstellung der Batterieelektrode ist, wobei die elektromagnetische Strahlung IRR die zur Trocknung der Beschichtung vorgesehene Strahlung ist. Die EM-Quelle ist bspw. ein Laser, insbesondere ein Diodenlaser, oder eine IR-Quelle.

Die EM-Quelle ist derart konfiguriert und an die Eigenschaften der Beschichtung, insbesondere der Oberfläche der Beschichtung, angepasst, dass die von ihr abgegebene elektromagnetische Strahlung IRR bei der Reflektion an der Oberfläche der Beschichtung das reflektierte Strahlenfeld IRR_REFL derart bewirkt, dass es ein als Speckle-Muster SPECK ausgebildetes Interferenzmuster aufweist, dass also das reflektierte Strahlenfeld IRR_REFL durch ein Speckle-Muster gekennzeichnet ist / ein Speckle-Muster aufweist / ein Speckle-Muster ist, wobei ein jeweiliges Speckle-Muster SPECK durch zumindest einen Parameter PARA_SPECK(i) charakterisiert ist, mit i=1,...,I.

Die Auswerteeinheit ist mit einer Kontrolleinheit zur Anpassung von Betriebsparametern von Komponenten der Produktionsanlage verbunden und derart eingerichtet, dass sie in Abhängigkeit von den bestimmten Parametern PARAMn ein Kontrollsignal CONTR erzeugt und an die Kontrolleinheit übermittelt, welche daraufhin und in Abhängigkeit vom Kontrollsignal CONTR und damit in Abhängigkeit von den bestimmten Parametern PARAMn Betriebsparameter BPA(k) einer oder mehrerer Komponenten k der Produktionsanlage anpasst.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Des Weiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: eine Produktionsanlage zur Herstellung einer Batterieelektrode,
- FIG 2: eine schematische Ansicht des erfindungsgemäßen Verfahrens.

Es sei eingangs erwähnt, dass im Folgenden eine Formulierung wie "Bestimmung eines Parameters PARAMn" meint, dass der Wert WERTn dieses Parameters PARAMn bestimmt wird. Wenn der Parameter bspw. die Schichtdicke sein soll, so bedeutet die genannte Formulierung, dass der Wert der Schichtdicke zu bestimmen ist.

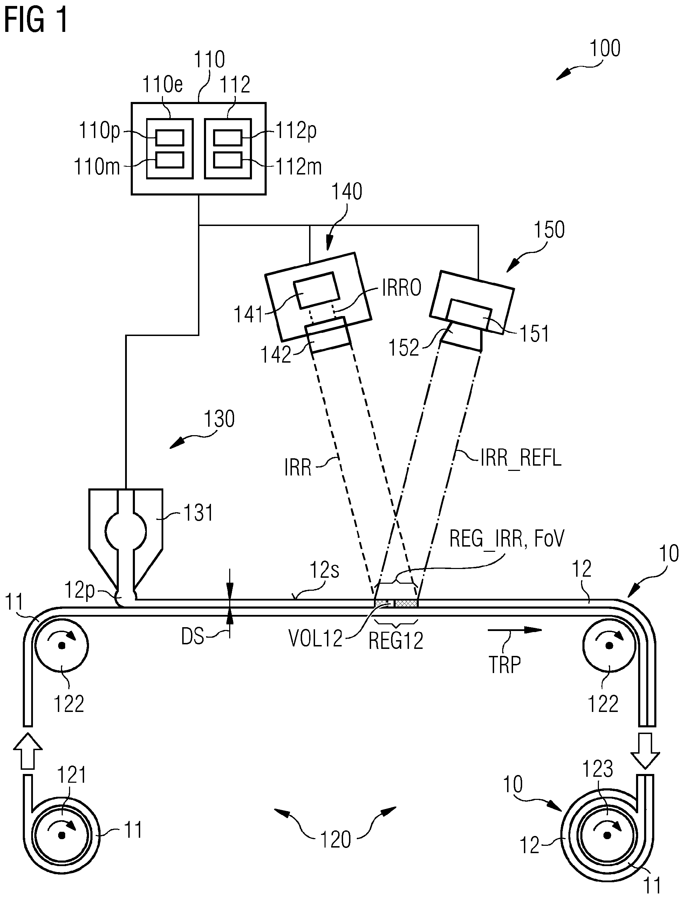

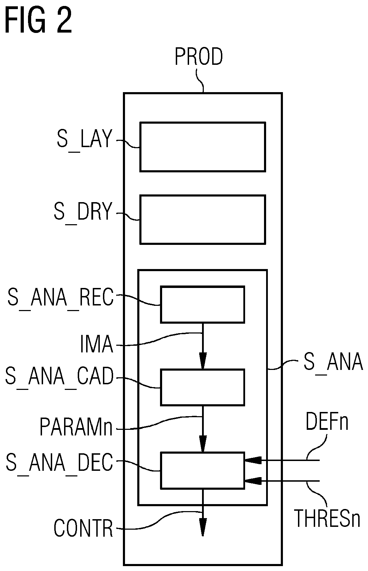

Die FIG 1 zeigt in stark vereinfachter, schematischer Form eine Seitenansicht einer Produktionsanlage 100 zur Herstellung einer Batterieelektrode 10 mit Hilfe eines Herstellprozesses PROD. Der Herstellprozess PROD wird im Rahmen der FIG 2 erläutert und umfasst im Wesentlichen einen Beschichtungsschritt S_LAY, einen Trocknungsschritt S_DRY und einen Analyseschritt S_ANA, wobei der Trocknungsschritt S_DRY und der Analyseschritt S_ANA bevorzugt, aber nicht zwingend, zumindest teilweise gleichzeitig ausgeführt werden. Idealerweise gehen Ergebnisse des Analyseschrittes S_ANA ihrerseits bei einer Steuerung bzw. Regelung des Beschichtungsschrittes S_LAY und/oder des Trocknungsschrittes S_DRY ein. Die Produktionsanlage 100 kann ein Teil einer übergeordneten Anlage zur Herstellung einer die Batterieelektrode umfassenden Batterie sein, was jedoch an dieser Stelle nicht von Relevanz ist und nicht näher erläutert wird.

Die Produktionsanlage 100 umfasst eine Transporteinrichtung 120, mit deren Hilfe eine Folie 11, bspw. eine Metallfolie, in einer Transportrichtung TRP bewegt werden kann. Die Folie 11 ist wie eingangs erwähnt eine Komponente der herzustellenden Batterieelektrode 10, auf der schließlich im Rahmen des Herstellprozesses PROD der Batterieelektrode 10 die Beschichtung 12 bestehend aus der anfangs nassen Paste 12p aufgebracht wird. Die Transporteinrichtung 120 kann bspw. u.a. mehrere Rollen 121, 122, 123 umfassen, über die die Folie 11 transportiert wird. Während die Rollen 122 in der gezeigten, einfachen Ausführungsform als Umlenkrollen fungieren, ist die Rolle 121 eine Abwickelrolle, auf der sich die Folie 11 ursprüngliche befindet und von der sie abgerollt und durch die Produktionsanlage 100 transportiert wird. Die Rolle 123 ist eine Aufwickelrolle, auf die die Batterieelektrode 10 umfassend die mit der Beschichtung 12 versehene Folie 11 aufgewickelt wird. In einer Ausführungsform ist zumindest die Rolle 123, vorzugsweise aber sämtliche Rollen 121, 122, 123 der Transporteinrichtung 120, mit Antrieben versehen (nicht dargestellt), um den Transport der Folie 11 zu bewerkstelligen.

Das Beschichten kann bspw. folgendermaßen erfolgen: Zum Aufbringen der Paste 12p auf die Folie 11 im Beschichtungsschritt S_LAY des Herstellprozesses PROD umfasst die Produktionsanlage ein Auftragswerkzeug 130, das die Paste 12 in vorgebbarer Menge pro Zeiteinheit zur Verfügung stellt, während sich die Folie 11 in ebenfalls vorgebbarer Weise bzw. Geschwindigkeit vTRP relativ zum Auftragswerkzeug 130 bewegt. Dies umfasst eine bevorzugte Ausbildung, bei der das Auftragswerkzeug 130 ruht und die Folie 11 mittels der Transporteinrichtung 120 bewegt wird. Grundsätzlich ist eine weitere Ausbildung denkbar, bei der die Folie 11 ruht und das Auftragswerkzeug 130 mittels einer entsprechenden, hier aber nicht dargestellten Einrichtung bewegt wird, sowie eine Ausbildung, bei der sowohl Auftragswerkzeug 130 als auch Folie 11 bewegt werden. In jedem Fall kommt es zu einer Relativbewegung zwischen Folie 11 und Auftragswerkzeug 130, so dass im Endeffekt die Beschichtung 12 in definierter Weise, d.h. insbesondere mit definierter Schichtdicke DS, auf die Folie 11 aufgebracht wird. Das Auftragswerkzeug 130 kann im Kontext der Batterieherstellung bspw. als Schlitzdüse, als sog. "Doctor Blade" oder als sog. "Comma Bar" ausgebildet sein.

Zur Trocknung der Beschichtung umfasst die Produktionsanlage 100 eine Trocknungseinrichtung 140, bspw. eine Wärmequelle. Die Trocknungseinrichtung 140 ist insbesondere als Quelle elektromagnetischer Strahlung bzw. als "EM-Quelle" ausgebildet. Im Trocknungsschritt S_DRY des Herstellprozesses PROD sendet die EM-Quelle 140 elektromagnetische Strahlung bzw. "EM-Strahlung" IRR in eine vorgegebene Bestrahlungsregion REG_IRR aus. Ein Abschnitt der Beschichtung 12 liegt dann in bzw. bewegt sich durch diese Bestrahlungsregion REG_IRR, so dass eine Trocknung des dort jeweils befindlichen Abschnitts REG12 der Beschichtung 12 bzw. der Paste 12 bewirkt wird.

Insbesondere wird die Folie 11 und mit ihr die Beschichtung 12 gleichzeitig mit der Ausführung der Trocknung im Trocknungsschritt S_DRY, d.h. während die EM-Strahlung IRR auf die Beschichtung 12 einwirkt, auch bezüglich der Trocknungseinrichtung 140 bewegt, so dass die vorgegebene Bestrahlungsregion REG_IRR dementsprechend über die Beschichtung 12 streift und in der Konsequenz die EM-Strahlung IRR auf verschiedene Abschnitte REG12 der Beschichtung 12 einwirkt, so dass letztlich die gesamte aufgebrachte Beschichtung 12 getrocknet werden kann. Dabei hängt die Trocknungswirkung auf ein bestimmtes Volumenelement VOL12 der Beschichtung 12, von denen in FIG 1 exemplarisch nur eines dargestellt ist, im jeweiligen Abschnitt REG12 vom Energieeintrag ΔE der EM-Strahlung IRR in dieses Volumenelement VOL12 ab. Der Energieeintrag ΔE hängt seinerseits zum einen von der Einwirkzeit der EM-Strahlung auf dieses Volumenelement VOL12 und zum anderen von den Parametern PAR_EM der EM-Strahlung IRR ab, insbesondere Energie bzw. Wellenlänge sowie Intensität. Die Einwirkzeit wird durch die von der Transporteinrichtung 120 vorgegebene Transportgeschwindigkeit vTRP beeinflusst, während die Parameter PAR_EM seitens der EM-Quelle 140 vorgegeben sind. Die Parameter PAR_EM umfassen, je nach Wahl der EM-Quelle 140, bspw. die Wellenlänge bzw. Energie der EM-Strahlung IRR und/oder deren Intensität. Für den Fall, dass die EM-Strahlung IRR gepulst ausgesendet wird, können die Parameter PAR_EM auch die Pulsdauer und-rate umfassen. Sowohl die Transportgeschwindigkeit vTRP als auch die Parameter PAR_EM sind durch eine Kontrolleinheit 110 der Produktionsanlage 100 einstellbar.

Die Trocknungseinrichtung 140 bzw. die EM-Quelle 140 kann bspw. als Infrarot-Quelle oder als Laser ausgebildet sein. Beim Einsatz von IR- oder Laserstrahlung als EM-Strahlung IRR zur Trocknung im industriellen Maßstab wirkt die Trocknungsenergie bzw. der Energieeintrag ΔE der IR- oder Laserstrahlung IRR in kurzer Zeit im durch die Bestrahlungsregion REG_IRR klar begrenzten Abschnitt REG12 auf das zu trocknende Material, d.h. auf die Beschichtung 12. Dies resultiert in einer sehr schnellen Trocknung, die primär vom direkten Energieeintrag ΔE im jeweiligen Abschnitt REG12 abhängt und weniger von einer Wärmeleitung aus benachbarten Abschnitten. Zur Erzeugung der EM-Strahlung IRR weist die EM-Quelle 140 einen Strahlungserzeuger 141 auf, der die eigentliche Strahlung IRR0 erzeugt, d.h. bspw. die IR- oder Laserstrahlung. Neben dieser eigentlichen Quelle 141 von bspw. IR- bzw. Laserstrahlung IRR0 umfasst die EM-Quelle 140 des Weiteren eine Optik 142, mit der die von dem Strahlungserzeuger 141 erzeugte Strahlung IRR0 in die EM-Strahlung IRR umgesetzt und auf die Bestrahlungsregion REG_IRR gelenkt werden kann, um dort die Trocknung des dort jeweils gerade befindlichen Abschnitts REG12 der Beschichtung 12 zu bewirken.

Zumindest ein Teil der von der EM-Quelle 140 abgestrahlten und in der Bestrahlungsregion REG12 auf die Beschichtung 12 fallenden EM-Strahlung IRR wird von dort reflektiert, so dass ein charakteristisches, aus der Bestrahlungsregion REG_IRR und vom Abschnitt REG12 reflektiertes Strahlenfeld IRR_REFL hervorgerufen wird. Das reflektierte Strahlenfeld IRR_REFL wird in der Folge genutzt, um Rückschlüsse auf die gesuchten Parameter PARAMn der Beschichtung 12 ziehen zu können.

Um zu diesem Zweck das reflektierte Strahlenfeld IRR_REFL detektieren bzw. abbilden und analysieren zu können, weist die Produktionsanlage 100 eine Kamera 150 auf. Die Kamera 150 ist derart eingerichtet und angeordnet, dass sie ein Sichtfeld FoV (field-of-view) abbildet, in welchem sich zumindest ein Teilbereich der Beschichtung 12 befindet, vorzugsweise die jeweilige momentane Bestrahlungsregion REG12. Dabei bezieht sich der Ausdruck, dass die Kamera 150 "derart eingerichtet und angeordnet" ist, darauf, dass die Kamera 150 zum einen einen für das Licht des reflektiertes Strahlenfeldes IRR_REFL maximal sensitiven und ortsauflösenden Sensor 151 aufweist, so dass jeweils ein zweidimensionales Bild IMA erzeugt wird. Da die ursprüngliche Strahlung IRR sowie die chemischen und physikalischen Eigenschaften der Beschichtung 12 an sich bekannt sind, kann davon ausgegangen werden, dass auch die Eigenschaften der reflektierten Strahlung IRR_REFL bekannt sind, so dass der Sensor 151 an sich optimal ausgewählt und Betriebsparameter ideal eingestellt werden können. Zum anderen kann die Kamera 150 mit einer Optik 152 ausgestattet sein, die eine Einstellung oder Anpassung des FoV erlaubt.

Die Kamera 150 nimmt typischerweise nicht nur ein einzelnes Bild IMA auf, sondern eine Zeitserie umfassend eine Vielzahl von Bildern IMA. Damit wird der Tatsache Rechnung getragen, dass die Folie 11 mit der Beschichtung 12 relativ zur Kamera 150 und relativ zur EM-Quelle 140 bewegt ist, so dass sich also mit der Zeit unterschiedliche Abschnitte REG12 der Beschichtung 12 in der Bestrahlungsregion REG_IRR befinden, die idealerweise sämtlich abgebildet werden sollten, um sicher zu stellen, dass weitestgehend die vollständige Beschichtung 12 überwacht wird. Die Kamera 150 kann bspw. so konfiguriert sein, dass die Bildaufnahmerate, d.h. die Anzahl der aufgenommenen Bilder IMA pro Zeiteinheit, so mit der Transportgeschwindigkeit vTRP abgestimmt ist, dass eine Aneinanderreihung von nacheinander aufgenommenen Bildern IMA ein vollständiges, lücken- und überlappfreies Abbild der Beschichtung 12 ergeben würde. Alternativ könnte auch eine Konfiguration ausreichen, bei der die Bildaufnahmerate eher niedrig gewählt ist, so dass die Beschichtung 12 nicht lückenlos, sondern nur stichprobenartig überwacht ist.

Das reflektierte Strahlenfeld IRR_REFL hängt zum einen von den Eigenschaften der ursprünglichen, das Strahlenfeld IRR_REFL auslösenden elektromagnetischen Strahlung IRR ab und zum anderen von der Beschichtung 12 selbst, welche die elektromagnetische Strahlung IRR reflektiert und damit das Strahlenfeld IRR_REFL erzeugt. Mit Hilfe der zur Trocknung eingesetzten EM-Strahlung IRR können nun bei geeigneter Auslegung der EM-Quelle 140 bei Reflektion an der Oberfläche 12s der Beschichtung 12 typische Interferenzmuster erzeugt werden. Erfindungsgemäß wird die EM-Quelle 140 derart konfiguriert, dass es bei der Reflektion der EM-Strahlung IRR an der Beschichtung 12 in der Bestrahlungsregion REG12 zu einer Interferenz kommt, bei der sich sog. "Speckle"-Muster SPECK ausbilden. Die EM-Strahlung IRR muss zur Ausbildung der Speckle-Muster SPECK eine ausreichend große räumliche Kohärenz aufweisen, die insbesondere größer ist als die zu betrachtende Strukturgröße, bspw. in einer Größenordnung im Bereich weniger µm bis 100µm.

Typischerweise werden Kohärenzlängen für Diodenlaser mit einigen mm angegeben. Somit eignen sich Diodenlaser als EM-Quelle 140 für die Zwecke der hier vorgesehenen Trocknung, wobei derartige Diodenlaser zudem auch die Voraussetzung der ausreichend großen räumlichen Koheränz typischerweise erfüllen. Die Größe d der Speckle-Strukturen bzw. der "Körnung" des Speckle-Musters SPECK kann exemplarisch abgeschätzt werden durch d = 0,26*L/NM, wobei "L" die Wellenlänge der vom Diodenlaser 140 emittierten EM-Strahlung IRR und "NM" die numerische Apertur der EM-Quelle 140 repräsentieren. Beispielhaft bewirkt das emittierte Licht IRR eines Diodenlasers 140 mit L=1000nm Wellenlänge und einer numerischen Apertur von NM=0,03 eine Speckle-"Körnung" d von d=8,7µm.

In der Konsequenz ist also das reflektierte Strahlenfeld IRR_REFL bei geeigneter Ausbildung der EM-Quelle 140 wie oben beschrieben durch ein Speckle-Muster SPECK gekennzeichnet bzw. weist also das reflektierte Strahlenfeld IRR_REFL ein Speckle-Muster SPECK auf bzw. ist in dem reflektierten Strahlenfeld ein Specklemuster enthalten.

Das bei der Reflektion an der Beschichtung 12 entstehende Speckle-Muster SPECK des reflektierten Strahlenfeldes IRR_REFL ist durch Parameter PARA_SPECK(i) miti=1,...,I charakterisiert. Diese Parameter PARA_SPECK(i) umfassen bspw. die bereits eingeführte Körnung d sowie den Speckle-Kontrast SC, den sog. "Bright-to-Dark-Pixel-Count" und die sog. "Grey-Level-Co-Occurance-Matrix". In der hier anvisierten Anwendung der Trocknung der Elektrodenbeschichtung 12 führt die Trocknung auch zu geometrischen und mechanischen Änderungen der Oberfläche 12s der Beschichtung 12, die direkt mit der zu ermittelnden Restfeuchte LIQ korreliert sind, bspw. Verringerung der Schichtdicke DS und/oder Veränderung der Struktur der Oberfläche 12s der Beschichtung 12. Derartige Änderungen können mittels der Auswertung der Speckle-Muster SPECK detektiert werden, da diese von den Eigenschaften der reflektierenden Beschichtung 12 beeinflusst sind. Bspw. kann die statistische Verteilung der Häufigkeit der Grauwerte im Speckle-Muster SPECK als Messgröße verwendet werden. Ein Speckle-Muster SPECK kann mit geringem technischem Aufwand mittels der Kamera 150 aufgezeichnet werden, indem die Kamera 150 das reflektierte Strahlenfeld IRR_REFL zur Aufnahme eines jeweiligen Bildes IMA abbildet. Wie unten beschrieben kann ein jeweiliges Bild IMA des Speckle-Musters SPECK nun zur Ermittlung der Parameter PARA_SPECK(i) ausgewertet werden, um daraus dann schließlich Parameter PARAMn mit n=1,..,N der Beschichtung 12 zu ermitteln, ohne zusätzliche, kostenintensive Sensoren in die Anlage zu integrieren und ohne die Beschichtung 12 selbst zerstören oder beschädigen zu müssen. Parameter PARAMn können bspw. die Rauheit RH der Oberfläche 12s der Beschichtung 12, die Schichtdicke DS der Beschichtung 12 und/oder das Vorhandensein von Inhomogenitäten, bspw. auch örtlich verschiedene Restfeuchten LIQ, sein.

Die Auswertung von Speckle-Mustern kann auf einer statischen Auswertung eines zu einem Zeitpunkt T0 aufgenommenen Musters SPECK(T0) oder aber auf einer dynamischen Auswertung der Intensitätsänderung der einzelnen Pixel über die Zeit t beruhen.

Die statische Auswertung kann bspw. für die Untersuchung der Oberflächenstruktur eingesetzt werden. Bspw. zur Bestimmung der Rauheit RH der Oberfläche 12s kann der Speckle-Kontrast SC als aussagekräftiger statistischer Parameter hinzugezogen werden. Der Speckle-Kontrast SC ermittelt sich aus der mittleren Intensität I(ROI) in einem Gebiet ROI (region of interest) im Bild IMA und der entsprechenden Standardabweichung σ(ROI) mittels SC=σ(ROI)/I(ROI), wobei das Gebiet ROI zumindest einen Teil der Pixel eines jeweiligen Bildes IMA umfasst, die zum dort abgebildeten Speckle-Muster SPECK gehören.

Des Weiteren können Machine Learning Methoden eingesetzt werden, die die statistischen Zusammenhänge zwischen Speckle-Muster SPECK und Oberflächenrauheit RH nutzen.

Bei der dynamischen Auswertung kann der durch die Trocknungseinrichtung 140 bzw. die EM-Quelle 140 bewirkte Energieeintrag in das Material der Beschichtung 12 und die damit verbundene thermische und mechanische Anregung des Materials ausgenutzt werden. Diese Anregung durch Absorption der eingestrahlten Leistung ist unter anderem von der in der Beschichtung 12 vorhandenen Restfeuchte abhängig. Damit stellt sich eine von der Restfeuchte abhängige dynamische Änderung des Speckle-Musters SPECK(t) ein, die zur Bestimmung der Restfeuchte genutzt werden kann.

Da die Änderung des Speckle-Musters SPECK(t) nicht nur von der Restfeuchte, sondern generell von spezifischen Materialeigenschaften der Beschichtung 12 abhängt, kann eine gezielte Kalibrierung auf bestimmte Beschichtungstypen vorteilhaft sein. Eine solche Kalibrierung kann bspw. über die gravimetrische Aufnahme einer Trocknungskurve bei gleichzeitiger Aufnahme der entsprechenden Speckle-Muster SPECK erfolgen.

Ebenfalls können Zusammenhänge zwischen statischen und dynamischen Speckle-Mustern SPECK und der Beschichtungsdicke DS genutzt werden. Für statische Muster SPECK(T0) kann ein je nach Beschichtungsmaterial und -methode bestehender statistischer Zusammenhang zwischen Schichtdicke DS und Rauheit RH bestehen, der zur Bestimmung der Rauheit RH aus den Speckle-Mustern eingesetzt werden kann. Bei der dynamischen Auswertung der Speckle-Muster SPECK(t) ist wiederum der Energieeintrag als Funktion der Schichtdicke DS zu sehen. So ist die Endringtiefe der EM-Strahlung IRR in das Material der Beschichtung 12 typischerweise begrenzt, so dass die EM-Strahlung IRR die Beschichtung 12 ab einer bestimmten Schichtdicke DS nicht mehr komplett durchdringt und der Energieeintrag nur in einen Teil der Beschichtung 12 erfolgt, was zu einer Änderung in den dynamischen Speckle-Mustern SPECK(t) führt.

Eine Analyse von mit der Kamera 150 während der mit der EM-Strahlung IRR durchgeführten Trocknung erzeugten Bildern IMA kann somit im Analyseschritt S_ANA des Herstellprozesses PROD verwendet werden, um mit kostengünstiger Technologie eine Inline-Messung wesentlicher Parameter PARAMn der Beschichtung 12 zu ermöglichen.

Zur Bestimmung der Parameter PARAMn aus einem jeweils aufgenommenen Speckle-Muster SPECK werden in einem Teilschritt S_ANA_CAL des Analyseschritts S_ANA die Bilder IMA der Kamera 150 analysiert. Ein jeweiliges Bild IMA(i) zeigt ein Speckle-Muster und in einem ersten Schritt der Analyse werden die das jeweilige Speckle-Muster SPECK(i) charakterisierenden Parameter PARA_SPECK(i) bestimmt, nämlich bspw. Körnung d und Speckle-Kontrast SC. In einem zweiten Schritt werden aus diesen Parametern PARA_SPECK(i) die Parameter PARAMn der Beschichtung 12 ermittelt.

Der Analyseschritt S_ANA einschließlich der Aufnahme der Bilder IMA in einem ersten Analyseteilschritt S_ANA_REC und idealerweise auch einschließlich der Bestimmung der Parameter PARAMn im zweiten Analyseteilschritt S_ANA_CAL kann zumindest teilweise gleichzeitig mit dem Trocknungsschritt S_DRY, d.h. während des Trocknungsprozesses ausgeführt werden. Damit erfolgt die Bestimmung der Parameter PARAMn der Beschichtung 12 vorteilhafterweise in einem frühen Stadium des Herstellprozesses PROD, so dass der weitere Herstellprozess PROD bspw. im Beschichtungsschritt S_LAY und/oder im Trocknungsschritt S_DRY ggf. frühzeitig angepasst werden kann, bspw. falls einer oder mehrere der Parameter PARAMn von bestimmten Vorgaben abweichen. Dies erlaubt eine wesentliche Verbesserung der Effizienz des Herstellprozesses PROD.

Die Ergebnisse PARAMn der Analyse im Schritt S_ANA_CAL werden in einem weiteren Analyseteilschritt S_ANA_DEC des Analyseschritts S_ANA weiter verarbeitet, um zu entscheiden, ob bspw. ein Eingreifen in den Herstellprozess PROD vonnöten ist und wie ein solches Eingreifen ggf. ausgebildet ist. Die Ergebnisse PARAMn können also bspw. direkt zur Nachjustierung des Trocknungsprozesses im Trocknungsschritt S_DRY verwendet werden, um bspw. über die Einhaltung bestimmter geometrischer Eigenschaften die verbleibende Restfeuchte LIQ einzuschränken. Bei Erkennen einer allgemeinen Drift oder phasenweiser Feuchtigkeitsabweichungen oder, allgemeiner ausgedrückt, für den Fall, dass im Analyseteilschritt S_ANA_DEC erkannt wird, dass einer oder mehrere der bestimmten Parameter PARAMn signifikant von den bestimmten Vorgaben abweichen, kann entschieden werden, dass ein Eingreifen in den Herstellprozess PROD notwendig ist. Die geeignete Ausbildung des Eingreifens kann dann im Analyseteilschritt S_ANA_DEC bspw. in Abhängigkeit vom Ausmaß der Abweichung der Parameter PARAMn von den Vorgaben festgelegt werden. Bspw. kann mit einer rückgekoppelten Regelschleife und mit Hilfe der Kontrolleinheit 110 der Trocknungsschritt S_DRY optimiert werden, indem die Parameter PAR_EM der EM-Strahlung IRR, also bspw. Energie bzw. Wellenlänge und/oder Intensität, oder allgemeiner ausgedrückt die Leistung der EM-Quelle 140 angepasst werden. Alternativ oder zusätzlich kann bspw. die Transportgeschwindigkeit vTRP im Beschichtungsschritt S_LAY angepasst werden, so dass die Einwirkzeit der EM-Strahlung IRR auf ein jeweiliges Volumenelement VOL12 der Beschichtung 12 geändert wird. Alternativ oder zusätzlich kann ebenfalls im Beschichtungsschritt S_LAY das Auftragswerkzeug 130 bzgl. der Menge der pro Zeiteinheit abgegebenen Paste 12 geregelt werden.

Zu diesen Zweck sind je nach Bedarf die Trocknungseinrichtung 140, das Auftragswerkzeug 130 und/oder die Transporteinrichtung 120 durch die bereits erwähnte Kontrolleinheit 110 der Produktionsanlage 100 steuer- bzw. ggf. regelbar. Dabei wird die Trocknungseinrichtung 140 hinsichtlich der genannten Parameter PAR_EM der EM-Strahlung IRR, das Auftragswerkzeug 130 bzgl. der Menge der pro Zeiteinheit abgegebenen Paste 12 und ggf. die Transporteinrichtung 120 hinsichtlich der Transportgeschwindigkeit vTRP gesteuert bzw. geregelt. Bspw. kann für den Fall, dass die bestimmten Parameter PARAMn der Beschichtung auf eine zu hohe Restfeuchte LIQ hindeuten, kann die Transportgeschwindigkeit vTRP verringert und/oder die Leistung der EM-Quelle 140 und damit jeweils der Energieeintrag ΔE pro Volumenelement VOL12 erhöht werden.

Die Kontrolleinheit 110 umfasst in einer ersten Ausbildung neben einer üblichen Elektronik 110e zur Steuerung / Regelung der Trocknungseinrichtung 140, des Auftragswerkzeugs 130, der Transporteinrichtung 120, der Kamera 150 und/oder weiterer eventueller Komponenten der Produktionsanlage 100 des Weiteren eine Analyseeinheit 112, die zumindest Teile des Analyseschritts S_ANA ausführt, insbesondere die Teilschritte S_ANA_CAL und S_ANA_DEC.

Die Elektronik 110e kann einen Prozessor 110p umfassen, der eingerichtet ist, eine Software auszuführen, um die Trocknungseinrichtung 140, das Auftragswerkzeug 130, die Transporteinrichtung 120, die Kamera 150 und/oder die weiteren eventuellen Komponenten zu kontrollieren und bspw. deren Betriebsparameter einzustellen und damit den Herstellprozess PROD zu kotrollieren. Die Software sowie benötigte Daten etc. können in einem Speicher 110m der Elektronik 110e abgelegt sein.

Die Analyseeinheit 112 umfasst einen Prozessor 112p sowie einen Speicher 112m. Der Prozessor 112p wird eingesetzt, um eine im Speicher 112m abgelegte Software auszuführen, um wie oben beschrieben den Analyseteilschritt S_ANA_CAL zur Bestimmung der Parameter PARAMn aus den Bildern IMA und den Analyseteilschritt S_ANA_DEC zur Entscheidung ob und ggf. wie in den Herstellprozess PROD einzugreifen ist. Die Analyseeinheit 112 kann mit der Elektronik 110e verbunden sein, um ggf. Einfluss auf den Herstellprozess PROD zu nehmen bzw. den Herstellprozess PROD zu kontrollieren.

Die Prozessoren 110p und 112p können auch als ein gemeinsamer Prozessor realisiert sein. Entsprechendes gilt für die Speicher 110m und 112m.

In einer alternativen Ausbildung kann die Analyseeinheit 112 in einem separaten, hier aber nicht dargestellten Computersystem untergebracht sein und nicht in der Kontrolleinheit 110. In dem Fall werden die Bilder IMA nicht zwingend an die Kontrolleinheit 110 übermittelt, sondern an das separate Computersystem und an die dortige Analyseeinheit 112. Die Ergebnisse der dort ausgeführten Prozessierung in den Teilschritten S_ANA_CAL und S_ANA_DEC werden dann an die Kontrolleinheit 110 übermittelt, so dass diese ggf. entsprechende Maßnahmen einleiten kann.

Wie in der FIG 2 zusammengefasst umfasst der Herstellprozess PROD den Beschichtungsschritt S_LAY, den Trocknungsschritt S_DRY und den Analyseschritt S_ANA. Die im Folgenden verwendete Formulierung "in einer durch die Kontrolleinheit 110 kontrollierten Art und Weise" soll jeweils ausdrücken, dass die Betriebsparameter der jeweils kontrollierten Komponente 120, 130, 140, 150 der Produktionsanlage 100 von der Kontrolleinheit 110, insbesondere von der Elektronik 110e, vorgegeben werden und damit also auch während des ausgeführten Herstellprozesses PROD durch die Kontrolleinheit 110 angepasst werden können.

Im Beschichtungsschritt S_LAY wird die Beschichtung 12 auf die Folie 11 aufgebracht wird, indem bspw. das Auftragswerkzeug 130 in einer durch die Kontrolleinheit 110, insbesondere durch deren Elektronik 110e, kontrollierten Art und Weise Paste 12p bereitstellt, während die Folie 11, ebenso in einer durch die Kontrolleinheit 110, insbesondere durch deren Elektronik 110e, kontrollierten Art und Weise, mittels der Transporteinrichtung 120 am Auftragswerkzeugs 130 entlang geführt wird, so dass die Paste 12p die idealerweise homogene Beschichtung 12 auf der Folie 11 bildet.

Im Trocknungsschritt S_DRY wird die Folie 11 mit der nun aufgebrachten Beschichtung 12 an der Trocknungseinrichtung 140 entlanggeführt, so dass die Beschichtung 12 abschnittsweise in die Bestrahlungsregion REG_IRR der Trocknungseinrichtung 140 gelangt. Die Trocknungseinrichtung 140 bestrahlt die Bestrahlungsregion REG_IRR und damit die dort jeweils liegenden Abschnitte REG12 der Beschichtung 12 in einer durch die Kontrolleinheit 110, insbesondere durch deren Elektronik 110e, kontrollierten Art und Weise mit der EM-Strahlung IRR, was dort zum einen zu einer Trocknung führt. Zum anderen wird die Strahlung IRR zumindest teilweise reflektiert, wobei sich insbesondere Speckle-Interferenzmuster SPECK in dem reflektierten Strahlenfeld IRR_REFL ausbilden.

Der durch die Analyseeinheit 112 ausgeführte Analyseschritt S_ANA umfasst die Teilschritte S_ANA_REC, S_ANA_CAL und S_ANA_DEC.

Im Teilschritt S_ANA_REC werden mit Hilfe der Kamera 150 in einer durch die Analyseeinheit 112 kontrollierten Art und Weise Bilder IMA aufgenommen, die insbesondere das von den Speckle-Mustern charakterisierte, reflektierte Strahlenfeld IRR_REFL abbilden. Die Bilder IMA werden der Analyseeinheit 112 zugeführt.

Im Teilschritt S_ANA_CAL werden die Bilder IMA durch die Analyseeinheit 112 prozessiert, um die Parameter PARAMn der Beschichtung 12 zu bestimmen.

Im Teilschritt S_ANA_DEC werden die bestimmten Parameter PARAMn durch die Analyseeinheit 112 dahingehend weiter verarbeitet, dass entschieden wird, ob in den Herstellprozess PROD eingegriffen werden muss und, wenn ja, an welcher Stelle des Herstellprozesses PROD und wie ein solcher Eingriff erfolgt. Zur Entscheidung, ob einzugreifen ist, können die bestimmten Parameter PARAMn bspw. mit entsprechenden Vorgaben DEFn vergleichen werden. Wenn bspw. die Abweichung eines oder mehrerer der bestimmten Parameter PARAMn von der entsprechenden Vorgabe DEFn einen Schwellwert THRESn übersteigt, kann die Entscheidung, ob in den Prozess PROD einzugreifen ist, positiv ausfallen, d.h. ein Eingriff wird als notwendig angesehen. Vorgaben DEFn wie auch Schwellwerte THRESn können durch einen Operator der Produktionsanlage 100 oder durch eine Software, bspw. diejenige zur Steuerung der Produktionsanlage 100, welche von der Elektronik 110e ausgeführt wird, bereitgestellt werden. Bei einer solchen positiven Entscheidung kann in Abhängigkeit davon, für welchen der Parameter PARAMn die signifikante Abweichung festgestellt wurde, entschieden werden, an welcher Stelle bzw. bei welcher der Komponenten 120, 130, 140, 150 der Produktionsanlage 100 in den Prozess PROD einzugreifen ist. Wenn bspw. der Wert des Parameters "Schichtdicke" kleiner ist als die entsprechende Vorgabe, kann die Transportgeschwindigkeit vTRP reduziert werden. Wenn bspw. der Parameter "Restfeuchte" LIQ zu hoch ist, kann ebenfalls die Transportgeschwindigkeit vTRP reduziert oder aber die Leistung der EM-Quelle 140 erhöht werden. Weiterhin kann bei einer solchen positiven Entscheidung in Abhängigkeit davon, wie weit der entsprechende Parameter PARAMn von der Vorgabe DEFn abweicht, entschieden werden, wie der Eingriff in den Herstellprozess PROD erfolgen soll, d.h. in welchem Umfang die Betriebsparameter der betroffenen Komponente 120, 130, 140, 150 angepasst werden. Wenn bspw. wiederum die Schichtdicke kleiner ist als die entsprechende Vorgabe, und zwar bspw. um 20%, kann die Transportgeschwindigkeit vTRP genau so weit reduziert werden, dass diese 20% Abweichung kompensiert werden. Wenn wiederum bspw. die Restfeuchte LIQ zu hoch ist, und zwar wieder bspw. um 20%, kann ebenfalls die Transportgeschwindigkeit vTRP reduziert oder aber die Leistung der EM-Quelle 140 erhöht werden, und zwar ebenfalls genau um einen Wert, der die 20% Abweichung kompensiert. Der vom der Analyseeinheit 112 ausgeführte Teilschritt S_ANA_DEC liefert also bei "positiver Entscheidung" als Ergebnis bzw. Kontrollsignal CONTR eine Identifizierung ID(k) der Komponente k, deren Betriebsparameter anzupassen ist, eine Identifizierung BPA(k) des anzupassenden Betriebsparameters der Komponente k und des Weiteren einen Wert VAL(BPA(k)), der den Wert der Anpassung des anzupassenden Betriebsparameters BPA(k) repräsentiert. Dabei wird die Identifizierung BPA(k) des anzupassenden Betriebsparameters nur dann benötigt, wenn die Komponente k mehrere anpassbare Betriebsparameter aufweist. Dies kann bspw. bei der EM-Quelle 140 der Fall sein, die hinsichtlich der Betriebsparameter "Intensität" und "Wellenlänge" einstellbar sein könnte. Das Kontrollsignal CONTR wird der Elektronik 110e der Kontrolleinheit 110 zugeführt, welche daraufhin ggf. den Betriebsparameter BPA(k) der Komponente k gemäß ID(k) entsprechend dem Wert VAL(BPA(k)) anpasst.

Das beschriebene Verfahren ermöglicht das Feststellen von Veränderungen, Störungen oder Fehlern in der Beschichtung 12 im Bereich weniger µm, die mit bisher angewandten Verfahren wie der Überwachung mit Kameras nicht erkannt werden können, da die räumliche Auflösung der bisher eingesetzten Kamerasysteme dies nicht zulässt oder kein ausreichender optischer Kontrast erzeugt wird, was u.a. durch für die Photographie ungünstige Eigenschaften der zu untersuchenden Materialien wie die geringe Reflektivität bedingt ist.

Der hier beschriebene Ansatz ermöglicht die Inline-Bestimmung wichtiger Qualitätsparameter, d.h. während des Herstellprozesses PROD, und damit frühzeitig im Prozess PROD bereits während des Trocknungsschrittes S_DRY, wobei gleichzeitig eine hohe Ortsauflösung der Messung möglich ist.

Der oben beschriebene Ansatz nimmt an, dass die Kamera 150 Bilder IMA liefert, anhand derer die weitere Auswertung ausgeführt wird. Die Kamera 150 kann jedoch in allgemeinerer Ausdrucksweise als "Detektor" 150 ausgebildet sein, welche "Repräsentationen" IMA, bspw. Bilder IMA, des reflektierten Strahlenfeldes IRR_REFL mit Speckle-Muster SPECK generiert. Aus diesen Repräsentationen IMA lassen sich wiederum die Parameter PARA_SPECK(i) des Speckle-Musters SPECK ableiten, woraus schließlich die Parameter PARAMn der Schichtung zu bestimmen sind.

Auch wenn die vorliegende Erfindung unter Bezugnahme auf konkrete Ausführungsformen beschrieben wurde, versteht es sich, dass diverse Änderungen und Modifikationen an den beschriebenen Ausführungsformen vorgenommen werden können, ohne den Bereich der erfinderischen Idee zu verlassen. Die vorstehende Beschreibung sollte als veranschaulichend und nicht als einschränkend angesehen werden und so, dass sämtliche Äquivalente und/oder Kombinationen von Ausführungsformen von der Beschreibung umfasst sind. Somit ist die Erfindung nicht auf die oben dargestellten Ausführungsformen beschränkt, vielmehr können von einer Fachperson Variationen abgeleitet werden, ohne vom Umfang der Erfindung abzuweichen.

## Patentansprüche

1. Verfahren zur Bestimmung einer Gruppe von Parametern PARAMn einer Beschichtung (12) einer Batterieelektrode (10), wobei
- in einem ersten Schritt S1 mit Hilfe einer EM-Quelle (140) elektromagnetische Strahlung IRR derart zumindest auf einen vorgegebene Abschnitt (REG12) der Beschichtung (12) der Elektrode (10) appliziert wird, dass ein charakteristisches, aus dem Abschnitt (REG12) reflektiertes Strahlenfeld IRR_REFL hervorgerufen wird,
- in einem zweiten Schritt S2 zumindest ein Teil des reflektierten Strahlenfeldes IRR_REFL mit Hilfe eines geeignet konfigurierten Detektors (150) detektiert wird,
- in einem dritten Schritt S3 aus dem detektierten Strahlenfeld die Parameter PARAMn der Beschichtung (12) abgeleitet werden.

2. Verfahren nach Anspruch 1, wobei die EM-Quelle (140) eine Wärmequelle einer Trocknungseinrichtung (140) einer Produktionsanlage (100) zur Herstellung der Batterieelektrode (10) ist, wobei der erste Schritt S1 Teil eines Trocknungsschrittes S_DRY eines Herstellprozesses PROD der Batterieelektrode (10) zur Trocknung der Beschichtung (12) mittels der elektromagnetischen Strahlung IRR ist.

3. Verfahren nach einem der Ansprüche 1 bis 2, wobei die EM-Quelle (140) derart eingerichtet ist, dass das reflektierte Strahlenfeld IRR_REFL ein als Speckle-Muster SPECK ausgebildetes Interferenzmuster aufweist, wobei ein jeweiliges Speckle-Muster SPECK durch zumindest einen Parameter PARA_SPECK(i) mit i=1,...,I charakterisiert ist.

4. Verfahren nach Anspruch 3, wobei
- im zweiten Schritt S2 beim Detektieren in einem Teilschritt S_ANA_REC mit der Kamera (150) Repräsentationen IMA, insbesondere Bilder IMA des reflektierten Strahlenfelds IRR_REFL erzeugt werden, welche das Speckle-Muster repräsentieren,
- im dritten Schritt S3 in einem Teilschritt S_ANA_CAL anhand zumindest einer der Repräsentationen IMA die Parameter PARAMn bestimmt werden.

5. Verfahren nach einem der Ansprüche 3 bis 4, wobei zur Bestimmung eines jeweiligen Parameters PARAMn vorab ermittelte Zusammenhänge zwischen dem jeweiligen Parameter PARAMn und einem oder mehreren Parameter PARA_SPECK(i) des Speckle-Musters SPECK verwendet werden.

6. Verfahren nach einem der Ansprüche 3 bis 5, wobei die Gruppe von Parametern PARAMn eine Restfeuchte LIQ, eine Rauheit RH einer Oberfläche 12s und/oder eine Schichtdicke DS der Beschichtung (12) in dem Abschnitt (REG12) umfasst, wobei
- die Restfeuchte LIQ bestimmt wird, indem derjenige oder diejenigen relevanten Parameter PARA_SPECK(i') des Speckle-Musters SPECK ausgewertet werden, welche von der Restfeuchte LIQ abhängen, insbesondere eine Körnung d und/oder ein Kontrast SC des Speckle-Musters SPECK und/oder deren zeitliche Änderung,
- die Schichtdicke DS bestimmt wird, indem derjenige oder diejenigen relevanten Parameter PARA_SPECK(i") des Speckle-Musters SPECK ausgewertet werden, welche von der Schichtdicke DS abhängen, insbesondere die zeitliche Änderung der Körnung d des Speckle-Musters SPECK(t),
- die Rauheit RH der Oberfläche bestimmt wird, indem derjenige oder diejenigen relevanten Parameter PARA_SPECK(i‴) des Speckle-Musters SPECK ausgewertet werden, welche von der Rauheit RH abhängen, insbesondere ein Speckle-Kontrast SC.

7. Verfahren nach einem der Ansprüche 1 bis 6, wobei die Gruppe von Parametern PARAMn der Beschichtung (12) während der Ausführung eines Prozesses PROD zur Herstellung der Batterieelektrode (10) in einer mehrere Komponenten (120, 130, 140, 150) umfassenden Produktionsanlage (100) bestimmt wird.

8. Verfahren nach einem der Ansprüche 1 bis 7, wobei ein Kontrollsignal CONTR in Abhängigkeit von den bestimmten Parametern PARAMn erzeugt wird und Betriebsparameter BPA(k) einer oder mehrerer Komponenten k der Produktionsanlage (100) in Abhängigkeit von dem Kontrollsignal CONTR und damit in Abhängigkeit von den bestimmten Parametern PARAMn angepasst werden.

9. Verfahren nach einem der Ansprüche 7 bis 8, wobei
- der Betrieb zumindest einer der Komponenten k (120, 130, 140, 150) zur Ausführung des Herstellprozesses PROD von Werten VAL(BPA(k)) von jeweiligen Betriebsparametern BPA(k) der jeweiligen Komponente k (120, 130, 140, 150) abhängt,
wobei in einem Analyseteilschritt S_ANA_DEC des dritten Schritts S3
- die bestimmten Parameter PARAMn mit entsprechenden Vorgaben DEFn verglichen werden und
- für den Fall, dass zumindest einer der bestimmten Parameter PARAMn signifikant von der entsprechenden Vorgabe DEFn abweicht, ein Wert VAL(BPA(k)) zumindest eines bestimmten Betriebsparameters BPA(k) der zumindest einen Komponente k (120, 130, 140, 150) angepasst wird, um die Abweichung zu kompensieren.

10. Verfahren nach Anspruch 9, wobei im Teilschritt S_ANA_DEC die Entscheidung, welcher Betriebsparameter BPA(k) welcher Komponente k (120, 130, 140, 150) auf welchen neuen Wert VAL(BPA(k)) angepasst wird, davon abhängt,
- für welchen Parameter PARAMn die signifikante Abweichung festgestellt wurde,
- um welchen Wert dieser Parameter PARAMn von der entsprechenden Vorgabe DEFn abweicht.

11. Vorrichtung zur Bestimmung einer Gruppe von Parametern PARAMn einer Beschichtung einer Batterieelektrode (10), aufweisend eine EM-Quelle (140) zur Erzeugung elektromagnetischer Strahlung IRR, einen Detektor (150) und eine Auswerteeinheit (112), wobei
- die EM-Quelle (140) derart konfiguriert ist, dass die erzeugte elektromagnetische Strahlung IRR in eine vorgegebene Bestrahlungsregion REG_IRR ausgesendet wird und auf einen Abschnitt (REG12) auf einer Oberfläche (12s) der Beschichtung (12) fällt, so dass dort ein charakteristisches, aus dem Abschnitt (REG12) reflektiertes Strahlenfeld IRR_REFL hervorgerufen wird,
- der Detektor (150) derart konfiguriert ist, dass er das reflektierte Strahlenfeld IRR_REFL detektiert und demensprechende Repräsentationen IMA generiert,
- die Auswerteeinheit (112) eingerichtet ist, das Verfahren nach einem der Ansprüche 1 bis 10 auszuführen, um aus den Repräsentationen IMA die Parameter PARAMn zu bestimmen.

12. Vorrichtung nach Anspruch 11, wobei die EM-Quelle (140) eine Wärmequelle einer Trocknungseinrichtung (140) einer Produktionsanlage (100) zur Herstellung der Batterieelektrode (10) ist, wobei die elektromagnetische Strahlung IRR die zur Trocknung der Beschichtung (12) vorgesehene Strahlung ist.

13. Vorrichtung nach einem der Ansprüche 11 bis 12, wobei die EM-Quelle (140) derart konfiguriert ist, dass die von ihr abgegebene elektromagnetische Strahlung IRR bei der Reflektion an der Beschichtung (12) das reflektierte Strahlenfeld IRR_REFL derart bewirkt, dass es ein als Speckle-Muster SPECK ausgebildetes Interferenzmuster aufweist, wobei ein jeweiliges Speckle-Muster SPECK durch zumindest einen Parameter PARA_SPECK(i) charakterisiert ist, mit i=1,... ,I.

14. Vorrichtung nach einem der Ansprüche 11 bis 13, wobei die Auswerteeinheit (112) mit einer Kontrolleinheit (110) zur Anpassung von Betriebsparametern von Komponenten der Produktionsanlage (100) verbunden und derart eingerichtet ist, dass sie in Abhängigkeit von den bestimmten Parametern PARAMn ein Kontrollsignal CONTR erzeugt und an die Kontrolleinheit (112) übermittelt, welche daraufhin und in Abhängigkeit vom Kontrollsignal CONTR und damit in Abhängigkeit von den bestimmten Parametern PARAMn Betriebsparameter BPA(k) einer oder mehrerer Komponenten k der Produktionsanlage (100) anpasst.

15. Vorrichtung nach einem der Ansprüche 11 bis 14, wobei die EM-Quelle (140) ein Laser, insbesondere ein Diodenlaser, oder eine IR-Quelle ist.
